# EUROPEAN PATENT SPECIFICATION

(11) **EP 2 929 754 B1**
(45) Date of publication and mention of the grant of the patent: **14.12.2016**
(21) Application number: 14703966.3
(22) Date of filing: 14.01.2014
(51) Int. Cl.: H04W 76/02, H04W 88/06, H04L 12/707, H04W 40/12, H04W 48/18, H04W 48/20

(54) **WIRELESS REAL TIME MEDIA COMMUNICATIONS THROUGH THE USE OF MULTIPLE MEDIA STREAMS**
DRAHTLOSE ECHTZEITMEDIENKOMMUNIKATIONEN MITTELS MEHRERER MEDIENSTRÖME
COMMUNICATIONS MULTIMÉDIA EN TEMPS RÉEL SANS FIL PAR UTILISATION DE MULTIPLES FLUX MULTIMÉDIA

(30) Priority: 16.01.2013 US 201313742963
(43) Date of publication of application: 14.10.2015
(73) Proprietor: Microsoft Technology Licensing, LLC, Redmond, WA 98052 (US)
(72) Inventor: KUEHNEL, Thomas, Redmond, Washington 98052-6399 (US); HASSAN, Amer, Redmond, Washington 98052-6399 (US)
(74) Representative: Driver, Virginia Rozanne
(86) International application number: PCT/US2014/011370
(87) International publication number: WO 2014/113342

(56) References cited:
- WO-A2-2012/165814
- DE-A1-102004 049 705
- US-A1- 2009 088 169
- US-A1- 2012 260 296
- US-A1- 2012 314 651

## Description

### BACKGROUND

With the proliferation of computing and networking technologies, conventional communications are increasingly migrating to data networks, specifically wireless networks. For example, unified communication technologies enable users to communicate over various modalities and client devices, including portable devices, through wired and wireless networks. Users are also taking advantage of additional modalities with increasing frequency. Video conferences, application or whiteboard sharing sessions are common occurrence in daily business, academic, and personal lives.

In facilitating video and similar communication modalities, communication devices transmit and receive data-heavy media. With increased bandwidth usage and wireless networks, interference may become a serious concern for quality of service. As the user moves around or is at a location, where signal levels may be less than desirable, the communication link between the user's communication device and an access point may degrade to unacceptable levels for video or similar modalities due to interference.

DE 10 2004 049705 discloses a method for operation of closely coupled wireless networks with different network technologies.

US 2012/314651 discloses a communication control device including a communication path selecting unit that selects one or more wireless communication paths by which a wireless communication terminal and a processing executing device communicate with each other.

### SUMMARY

This summary is provided to introduce a selection of concepts in a simplified form that are further described below in the Detailed Description. This summary is not intended to exclusively identify key features or essential features of the claimed subject matter, nor is it intended as an aid in determining the scope of the claimed subject matter.

Embodiments are directed to ensuring high quality of service for real time media communications over wired, wireless, or combination of wired and wireless networks through use of multiple media streams. Taking advantage of a virtual radio stack implementation on a wireless communication device, the device may be associated to multiple access points and/or cellular base stations. Link qualities of each connection may be determined and a predefined number of links with best connections (or above a predefined threshold) may be selected for transmission. Media stream may then be compressed into multi-resolution or multi-compression streams such that each resolution (or compression stream) is transmitted over a separate access point or base station. The different compression streams that are available may then be combined or rendered at a wireless switch, a backend server of the cloud, or a remote client. Furthermore, the multi-compression schemes may be a function of the link quality reflected in the packet error rate, and when available it may be a function of the end-to-end delay and packet error rate at the IP level.

These and other features and advantages will be apparent from a reading of the following detailed description and a review of the associated drawings. It is to be understood that both the foregoing general description and the following detailed description are explanatory and do not restrict aspects as claimed.

### BRIEF DESCRIPTION OF DRAWINGS

FIG. 1 illustrates an example wireless communication environment with concurrent connections, where embodiments may be implemented;
FIG. 2 illustrates another example wireless communication environment, where multiple media streams may be transmitted over access points and/or cellular base stations;
FIG. 3 illustrates the architecture of an example client device according to some embodiments;
FIG. 4 is a networked environment, where a system according to embodiments may be implemented;
FIG. 5 is a block diagram of an example computing operating environment, where embodiments may be implemented; and
FIG. 6 illustrates a logic flow diagram for a process of ensuring acceptable quality of service for real time media communications over wireless networks through use of multiple media streams, according to embodiments.

### DETAILED DESCRIPTION

As briefly described above, a wireless communication device may be associated to multiple access points and/or cellular base stations. Link qualities of each connection may be determined and a predefined number of links with best connections (or above a predefined threshold) may be selected for transmission. Media stream may then be compressed into multi-resolution or multi-compression streams such that each resolution (or compression stream) is transmitted over a separate access point or base station to be rendered at a wireless switch, a backend server of the cloud, or a remote client.

In the following detailed description, references are made to the accompanying drawings that form a part hereof, and in which are shown by way of illustrations specific embodiments or examples. These aspects may be combined, other aspects may be utilized, and structural changes may be made without departing from the scope of the present disclosure. The following detailed description is therefore not to be taken in the limiting sense, and the scope of the present invention is defined by the appended claims and their equivalents. While the embodiments will be described in the general context of program modules that execute in conjunction with an application program that runs on an operating system on a personal computer, those skilled in the art will recognize that aspects may also be implemented in combination with other program modules.

Generally, program modules include routines, programs, components, data structures, and other types of structures that perform particular tasks or implement particular abstract data types. Moreover, those skilled in the art will appreciate that embodiments may be practiced with other computer system configurations, including hand-held devices, multiprocessor systems, microprocessor-based or programmable consumer electronics, minicomputers, mainframe computers, and comparable hardware. Embodiments may also be practiced in distributed computing environments where tasks are performed by remote processing devices that are linked through a communications network. In a distributed computing environment, program modules may be located in both local and remote memory storage devices.

Embodiments may be implemented as a computer-implemented process (method), a computing system, or as an article of manufacture, such as a computer program product or computer readable media. The computer program product may be a computer storage medium readable by a computer system and encoding a computer program that comprises instructions for causing a computer or computing system to perform example process(es). The computer-readable storage medium is a computer-readable memory device. The computer-readable storage medium can for example be implemented via one or more of a volatile computer memory, a non-volatile memory, a hard drive, a flash drive, a floppy disk, or a compact disk, and comparable hardware media.

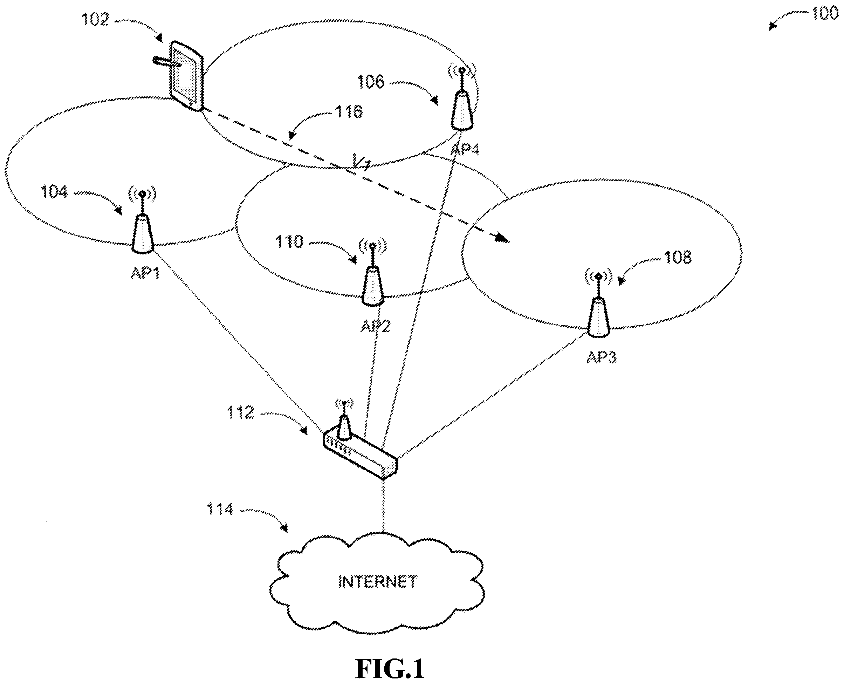

FIG. 1 illustrates an example wireless communication environment with concurrent connections, where embodiments may be implemented.

As mentioned above, wireless networks such as WLANs and similar configurations increasingly provide multi-modal communications that replace or complement traditional PSTN or cellular calls. Users may employ stationary or portable computing devices with wireless communication capability such as communication device 102 to communicate with other users on the same wireless network or on other networks (including cellular networks). The communications may include, but are not limited to, voice call, video communications, text messaging, email exchange, data sharing, application sharing, whiteboard sharing, and comparable ones.

The communication link between the user's communication device and an access point may degrade to unacceptable levels for video or similar modalities due to interference, however, when user moves around or is at a location, where signal levels may be less than desirable. In a wireless network, communication device 102 may communicate with the network infrastructure through an access point. A wireless network typically includes multiple access points, and the communication device 102 may be in communication with one or more of them (104, 106, 108, or 110) at any given time depending on signal quality, location, and other factors.

To address the potential degradation of media quality or performance and to enhance availability of multiple resolutions, a system according to embodiments may enable communication device 102 to compress its media stream (V1 116) into multi-resolution or multi-compression streams and transmit them over separate access points 104, 106, 108, and 110 as shown in diagram 100. If more access points are available than needed for the number of media streams, the communication device 102 may determine the available access points, determine the quality of communication link with each access point, and then select the ones with better link quality for the transmission.

The media streams from the access points 104, 106, 108, and 110 may be combined (or rendered) at a wireless switch 112 or a server of the cloud (not shown) before being forwarded to a remote client over the Internet 114. In other embodiments, the streams may be combined at the remote client. Thus, high quality of service for real time media communications over wired, wireless, or combination of wired and wireless networks may be ensured through use of multiple media streams. Multi-compression schemes may be used as a function of the link quality reflected in the packet error rate, and when available they may be a function of the end-to-end delay and packet error rate at the IP level.

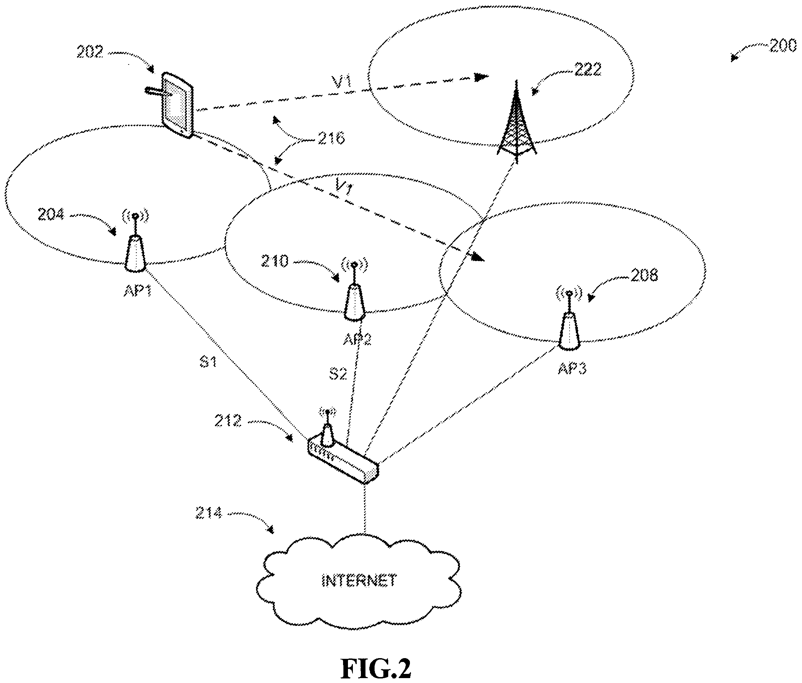

FIG. 2 illustrates another example wireless communication environment, where multiple media streams may be transmitted over access points and/or cellular base stations.

In some cases, communication devices may be capable of utilizing multiple wireless technologies such as cellular, WLAN, near field communication (NFC), etc. Diagram 200 shows an example configuration, where three access points (204, 208, and 210) are available for communication to the communication device 202, as well as a cellular base station 222. Thus, communication device 202 may transmit its compressed media streams (V1 216) over the access points as well as the cellular base station(s). The media streams from the access points 204, 208, and 210, and cellular base station 222 may then be combined (or rendered) at a wireless switch 212, a server of the cloud (not shown) before being forwarded to a remote client over the Internet 214, or at the remote client, as discussed above.

Embodiments are not limited to WLAN or cellular networks and may be employed with any wireless communication technology / protocol using the principles described herein. Generally, such wireless communication technologies may utilize non-simultaneous reception / transmission to and from access points. An example of such communication protocols is frequency division multiple access (FDMA) protocols.

Decomposition into multi-compression streams (e.g., S1 and S2 to access points AP1 and AP2) may be arranged such that if the receiving CODEC received S1 only (because S2 was not received for some reason), then the receiving CODEC output has a good quality media. Similarly, if the receiving CODEC receives only S2, the CODEC output may have a good quality media. If the receiving CODEC receives both streams, then the receiving CODEC output may have very high quality.

Thus, S1 and S2 may depend on the link quality (even though both link qualities may be above a predefined threshold). For example, S1 may be audio/video compression stream and S2 may be file sharing. In another example, S1 may be for input devices (e.g., time sensitive and access point 1 is high quality but with limited bandwidth) and S2 may be reserved for the rest of the media. In a further example, S1 may be 4G cellular transmitting high QoS part of media and S2 may be Wi-Fi best effort part of media. In yet another example, S1 may be 4G cellular transmitting high QoS part of media compression parameters and S2 may be Wi-Fi best effort part of media compression parameters.

As mentioned above, the multi-compression streams may be dependent on link quality. In some examples, end-to-end quality of the network may be available at the transmit CODEC (client side for example) and the multi-stream compression streams may be tuned according to network fingerprint (for example, in software defined networks). Thus, the client may query the network quality by sending test messages first. In response to the test messages (response being quality of the network), streams may be generated.

Once the high quality media stream is split into multiple streams, an identifier to each packet fragment may be sent on each stream. The identifier may be a time stamp or a sequence number. The combiner that is located in the cloud, switch, or client depending on the direction of the data traffic may combine the frames with matching identifiers as part of the combining to a high definition stream. Therefore, the combiner may hold and store those frames. Based on the nature of the traffic (e.g., real time requirements), the combiner may store those frames for a predefined period of time and may drop any frames from the streams that are running late. The combiner or codec may also deploy interpolation techniques to make up for the missing frames or to reduce the resolution / fidelity if the missing frames cannot be mitigated. If the delay on a particular link exceeds the maximum delay for the communication, it may be dropped from the communication, thereby, saving resources.

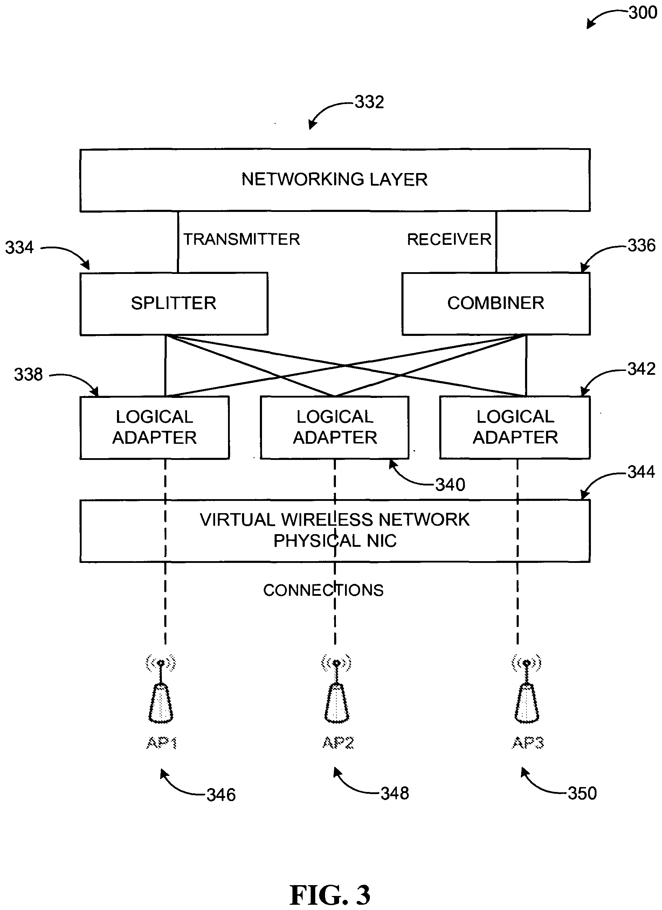

FIG. 3 illustrates the architecture of an example client device according to some embodiments.

A communication device capable of employing multiple stream media exchange over multiple access points may be any portable or stationary device with wireless communication capabilities and may include a notebook, a tablet, a smartphone, a vehicle mount computer, a specialized communication device, and so on. The media exchange may be part of a VoIP call, an online video conference, an application sharing session, a data sharing session, a media streaming session, or comparable sessions.

A communication device or a client device, as shown in diagram 300, may associate with multiple access points (and/or base stations) by virtue of its virtual radio stack and maintain concurrent (but not simultaneous) connection. The client device may determine link quality based on one or more predefined attributes such as received signal strength indicator (RSSI), packet error rate, number of repeats, etc. for each of these connections and select a number of them for transmitting (and receiving) multiple media streams. The number of selected connections may be based on a number of compressed media streams the communication device is capable of generating. The selection may be based on ordering the connections according to a link quality score, based on each attribute being compared to a threshold, or other factors such as user preference. For example, the link quality may be computed as a combination score of two or more of the example attributes listed above and the connections ordered from the best score down with the top three links being selected for transmission. In another example, a user may be enabled to modify the selected links based on security, cost of connection, and similar considerations.

Thus, the client device may decompose a media stream into multiple resolutions or compression streams and transmit each resolution through a separate access point or other network component, where the transmission decomposition and error correction may be dependent on the client-access point link quality. A remote client device, a wireless switch, or the cloud may be used for combining of streams (rendering).

A client device according to embodiments may take advantage of virtualization of wireless network interface controller. Accordingly, a single physical network interface controller (NIC) 344 that is present in the client device may present itself as multiple NICs. Those NICs may associate and authenticate themselves to multiple access points 346, 348, and 350. As such, the NICs can have concurrent transmission and reception with the access points. To maintain connectivity, the NIC may switch rapidly between the access points, which may be on different channels, but can also be on the same channel.

The client device may also include a networking layer 332, a splitter 334 on the transmit path and a combiner 336 on the receive path, and multiple logical adapters 338, 340, 342 for the virtual wireless NICs. Depending on the connection quality, the media stream may be split into multiple streams equal to the client - access point connections. The streams may be created such that when all combined provide for a good quality reception of the media.

The above discussed configurations are example configurations for illustrative purposes. Embodiments may be implemented with other configurations and approaches using the principles described herein.

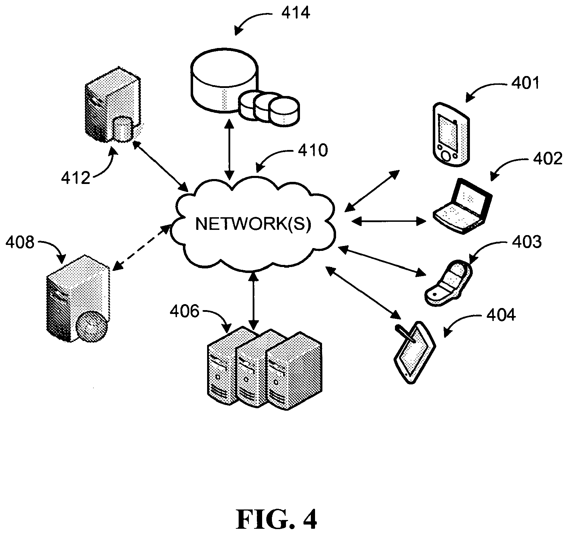

FIG. 4 is an example networked environment, where embodiments may be implemented. In addition to locally installed applications, such as communication application 522 discussed below, a communication service may also be employed in conjunction with hosted applications and services that may be implemented via software executed over one or more servers 406 or individual server 408. A hosted communication service or application may be a web-based service or application, a cloud based service or application, and similar ones, and communicate with client applications on individual computing devices such as a handheld computer 401, a laptop computer 402, a smart phone 403, or a tablet computer 404 ('client devices') through network(s) 410 and control a user interface presented to users. Such a service may enable users to interact with other users employing a variety of modalities and ensure acceptable quality of service for real time media communications over wireless networks through use of multiple media streams as discussed herein.

Client devices 401-404 are used to access the functionality provided by the hosted service or application. One or more of the servers 406 or server 408 may be used to provide location determination service as discussed above. Relevant data may be stored in one or more data stores (e.g. data store 414), which may be managed by any one of the servers 406 or by database server 412.

Network(s) 410 may comprise any topology of servers, clients, Internet service providers, and communication media. A system according to embodiments may have a static or dynamic topology. Network(s) 410 may include a secure network such as an enterprise network, an unsecure network such as a wireless open network, or the Internet. Network(s) 410 may also coordinate communication over other networks such as PSTN or cellular networks. Network(s) 410 provides communication between the nodes described herein. By way of example, and not limitation, network(s) 410 may include wireless media such as acoustic, RF, infrared and other wireless media.

Many other configurations of computing devices, applications, data sources, and data distribution systems may be employed to ensure acceptable quality of service for real time media communications over wireless networks through use of multiple media streams. Furthermore, the networked environments discussed in FIG. 4 are for illustration purposes only. Embodiments are not limited to the example applications, modules, or processes.

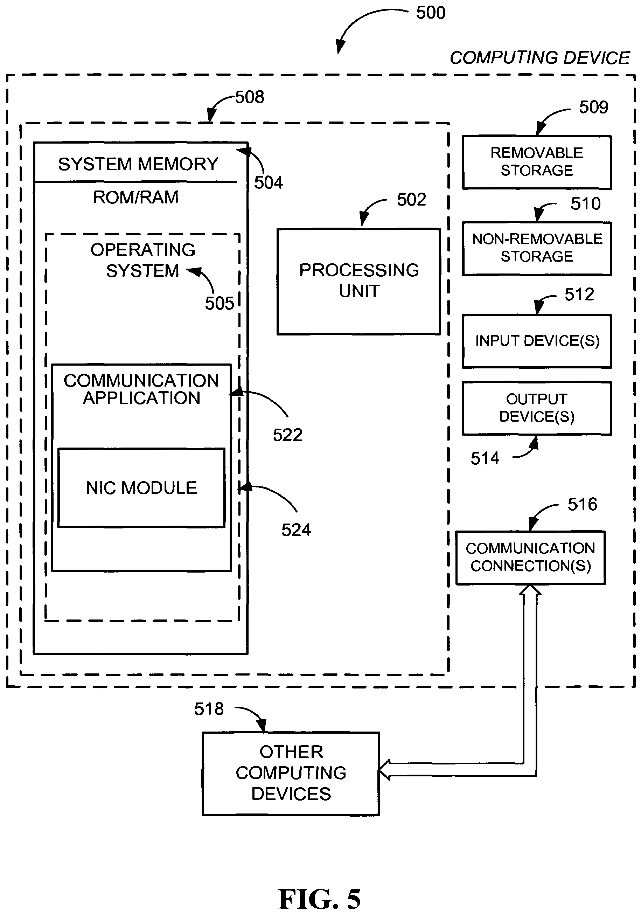

FIG. 5 and the associated discussion are intended to provide a brief, general description of a suitable computing environment in which embodiments may be implemented. With reference to FIG. 5, a block diagram of an example computing operating environment for an application according to embodiments is illustrated, such as computing device 500. In a basic configuration, computing device 500 may be any portable computing device with wireless communication capabilities, which may include touch and/or gesture detection capability in some examples, and include at least one processing unit 502 and system memory 504. Computing device 500 may also include a plurality of processing units that cooperate in executing programs. Depending on the exact configuration and type of computing device, the system memory 504 may be volatile (such as RAM), non-volatile (such as ROM, flash memory, etc.) or some combination of the two. System memory 504 typically includes an operating system 505 suitable for controlling the operation of the platform, such as the WINDOWS ®, WINDOWS MOBILE®, or WINDOWS PHONE® operating systems from MICROSOFT CORPORATION of Redmond, Washington. The system memory 504 may also include one or more software applications such as communication application 522 and a network interface control (NIC) module 524.

Communication application 522 may enable communication with other devices over a wireless network through one or more modalities ensuring acceptable quality of service for real time media communications over wireless networks through use of multiple media streams by taking advantage of a virtual radio stack implementation on computing device 500 through the NIC module 524. This basic configuration is illustrated in FIG. 5 by those components within dashed line 508.

Computing device 500 may have additional features or functionality. For example, the computing device 500 may also include additional data storage devices (removable and/or non-removable) such as, for example, magnetic disks, optical disks, or tape. Such additional storage is illustrated in FIG. 5 by removable storage 509 and non-removable storage 510. Computer readable storage media may include volatile and nonvolatile, removable and non-removable media implemented in any method or technology for storage of information, such as computer readable instructions, data structures, program modules, or other data. System memory 504, removable storage 509 and non-removable storage 510 are all examples of computer readable storage media. Computer readable storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 500. Any such computer readable storage media may be part of computing device 500. Computing device 500 may also have input device(s) 512 such as keyboard, mouse, pen, voice input device, touch input device, an optical capture device for detecting gestures, and comparable input devices. Output device(s) 514 such as a display, speakers, printer, and other types of output devices may also be included. These devices are well known in the art and need not be discussed at length here.

Computing device 500 may also contain communication connections 516 that allow the device to communicate with other devices 518, such as over a wireless network in a distributed computing environment, a satellite link, a cellular link, and comparable mechanisms. Other devices 518 may include computer device(s) that execute communication applications and comparable devices. Communication connection(s) 516 is one example of communication media. Communication media can include therein computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media.

Example embodiments also include methods. These methods can be implemented in any number of ways, including the structures described in this document. One such way is by machine operations, of devices of the type described in this document.

Another optional way is for one or more of the individual operations of the methods to be performed in conjunction with one or more human operators performing some. These human operators need not be collocated with each other, but each can be only with a machine that performs a portion of the program.

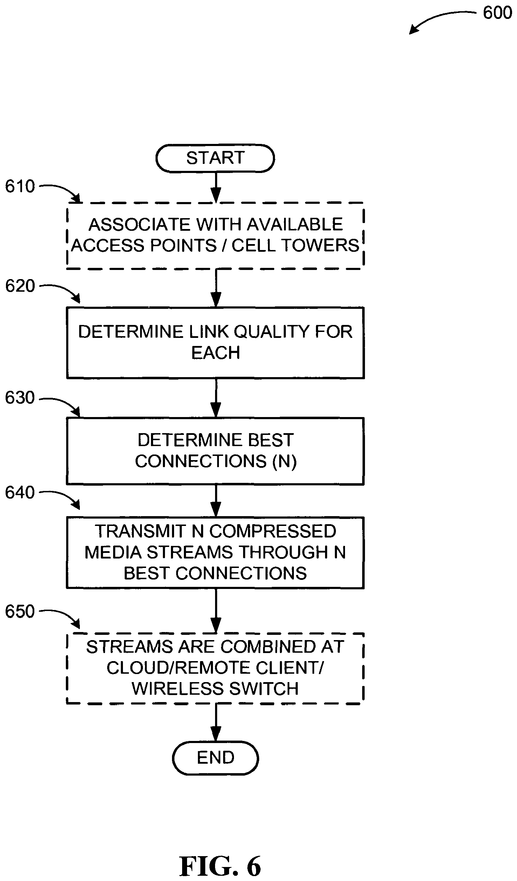

FIG. 6 illustrates a logic flow diagram for a process of ensuring acceptable quality of service for real time media communications over wireless networks through use of multiple media streams, according to embodiments. Process 600 may be implemented as part of a communication application.

Process 600 begins with optional operation 610, where a wireless communication device may be associated with one or more access points, cellular base stations, and/or similar wireless network components determining a list of available communication links. At operation 620, link quality (e.g., RSSI, packet error rate, number of repeats, and comparable attributes) for each link on the list may be determined. At operation 630, a predefined number of links (whether they are through an access point, a cellular base station, or other network component) with best link quality may be selected for transmission of media streams.

At operation 640, media streams into multi-resolution or multi-compression streams may be transmitted over the selected links. The streams may be combined / rendered at a remote client, a server in the cloud, or a wireless switch at optional operation 650.

The operations included in process 800 are for illustration purposes. Ensuring acceptable quality of service for real time media communications over wireless networks through use of multiple media streams according to embodiments may be implemented by similar processes with fewer or additional steps, as well as in different order of operations using the principles described herein.

Some embodiments may be implemented in a computing device that includes a communication module, a memory device, and a processor, where the processor executes a method as described above or comparable ones in conjunction with instructions stored in the memory device. Other embodiments may be implemented as a computer readable memory device with instructions stored thereon for executing a method as described above or similar ones. Examples of memory devices as various implementations of hardware are discussed above.

The above specification, examples and data provide a complete description of the manufacture and use of the composition of the embodiments. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims and embodiments.

## Claims

1. A method executed in a computing device (500) or in a distributed computing environment for ensuring acceptable quality of service for real time media communications over wireless networks, the method comprising:
determining a plurality of access points (104, 106, 108, 110) associated with one or more wireless networks;
determining a link quality for each of the access points ;selecting a subset of the access points based on the respective link qualities;
decomposing a media stream (116) into a number of streams, wherein the number of streams is equal to a number of access points in the subset; and
transmitting the streams to the subset of access points such that the streams are subsequently combined for use at a remote client;
**characterized in that** the method comprises further steps of:
associating and authenticating with each of the plurality of access points; and
employing a plurality of virtual radio stack adapters to maintain association and connection to the access points concurrently without simultaneous transmission or reception, and wherein the decomposing comprises compressing the media stream into one or more of multi-resolution streams and multi-compression streams.

2. The method of claim 1, wherein decomposing the media stream into the streams comprises:
compressing the media stream into two or more multi-resolution streams.

3. The method of claim 2,wherein:
at least one multi-compression stream is reserved for audio/video media and at least one other multi-compression stream is reserved for file sharing media;
at least one multi-compression stream is reserved for input devices and at least one other multi-compression stream is reserved for remaining media;
at least one multi-compression stream is reserved for a cellular link transmitting high quality of service part of media and at least one other multi-compression stream is reserved for remaining media; and
at least one multi-compression stream is reserved for a cellular link transmitting high quality of service part of media compression parameters and at least one other multi-compression stream is reserved for Wi-Fi best effort pat of media compression parameters.

4. The method of claim 1, further comprising:
determining one or more available base stations;
determining a link quality for each of the base stations;
selecting a subset of the base stations based on the respective link qualities, wherein the number of streams is equal to the number of selected access points and base stations; and
transmitting the streams to the selected access points and base stations such that the streams are subsequently combined for use at the remote client employing an identifier associated with each packet fragment on each stream.

5. The method of claim 4, wherein the base stations are cellular base stations (222).

6. A computing device (500) with wireless communication capability for ensuring acceptable quality of service for real time media communications over wireless networks, the computing device comprising:
a memory (504) storing instructions;
one or more wireless communication modules; and
a processor coupled to the memory and the communication modules, the processor executing a communication application, wherein the communication application is configured to:
determine the plurality of access points (104, 106, 108, 110) associated with one or more wireless networks;
determine a link quality for each of the plurality of the access points;
select a subset of the access points based on the respective link qualities;
decompose a media stream (116) into a number of streams, wherein the number of streams is equal to a number of access points in the subset; and
**characterized in that** the computing device is further configured to:
associate and authenticate with each of the plurality of access points; and
transmit the streams to the subset of access points such that the streams are subsequently combined for use at a remote client, wherein the step of decomposing comprises compressing the media stream into one or more of multi-resolution and multi-compression streams and the communication modules include a plurality of virtual radio stack adapters to maintain association and connection to a plurality of access points concurrently without simultaneous transmission or reception.

7. The computing device of claim 6, wherein the virtual radio stack adapters are part of a single network interface controller (NIC) (344) that presents itself as multiple NICs to the plurality of access points to associate and authenticate.

8. The computing device of claim 7, wherein the NIC is configured to switch between the selected access points during media streaming.

9. A computer-readable memory comprising instructions for ensuring acceptable quality of service for real time media communications over wireless networks, the instructions causing a computer to carry out the steps of:
determining a plurality of access points (104, 106, 108, 110) and base stations associated with the network;
determining link quality for each of the access points;
selecting a subset of the access points based on the respective link qualities;
decomposing a media stream (116) into a number of streams, wherein the number of streams is equal to a number of access points in the subset; and
transmitting the streams to the subset of access points such that the streams are subsequently combined for use at a remote client,
**characterized in that** the instructions further cause the computer to carry out the steps of:
associating and authenticating with each of the plurality of access points; and
employing a plurality of virtual radio stack adapters to maintain association and connection to the access points concurrently without simultaneous transmission or reception, and wherein that the decomposing comprises compressing the media stream into one or more of multi-resolution streams and multi-compression streams.

10. The computer program product of claim 9 wherein the link quality of an end-to-end quality associated with the network determined by transmitting test messages.

## Patentansprüche

1. Verfahren, das in einer Datenverarbeitungsvorrichtung (500) oder in einer verteilten Datenverarbeitungsumgebung ausgeführt wird, zum Sicherstellen einer akzeptablen Dienstgüte für Echtzeit-Medienkommunikationen über drahtlose Netzwerke, wobei das Verfahren Folgendes umfasst:
Bestimmen mehrerer Zugangspunkte (104, 106, 108, 110), die mit einem oder mehreren drahtlosen Netzwerken assoziiert sind;
Bestimmen einer Datenstreckenqualität für jeden der Zugangspunkte;
Auswählen einer Teilmenge der Zugangspunkte auf der Basis der jeweiligen Datenstreckenqualitäten;
Zerlegen eines Medienstroms (116) in eine Anzahl von strömen, wobei die Anzahl von Strömen gleich einer Anzahl von Zugangspunkten in der Teilmenge ist; und
Übertragen der Ströme an die Teilmenge von Zugangspunkten, so dass die Ströme anschließend zur Verwendung an einem entfernten Clienten kombiniert werden;
**dadurch gekennzeichnet, dass** das Verfahren die folgenden weiteren Schritte umfasst:
Assoziieren und Authentifizieren mit jedem der mehreren Zugangspunkte und
Einsetzen mehrerer virtueller Radio-Stack-Adapter, um eine Assoziation und Verbindung mit den Zugangspunkten gleichzeitig ohne simultane Übertragung oder simultanen Empfang aufrechtzuerhalten, und wobei das Zerlegen das Komprimieren des Medienstroms zu einem oder mehreren von Mehrfachauflösungsströmen und Mehrfachkompressionsströmen umfasst.

2. Verfahren nach Anspruch 1, wobei das Zerlegen des Medienstroms in die Ströme Folgendes umfasst:
Komprimieren des Medienstroms zu zwei oder mehr Mehrfachauflösungsströmen.

3. Verfahren nach Anspruch 2, wobei:
mindestens ein Mehrfachkompressionsstrom für Audio-/Videomedien reserviert ist und mindestens ein anderer Mehrfachkompressionsstrom für File-Sharing-Medien reserviert ist;
mindestens ein Mehrfachkompressionsstrom für Eingabevorrichtungen reserviert ist und mindestens ein anderer Mehrfachkompressionsstrom für restliche Medien reserviert ist;
mindestens ein Mehrfachkompressionsstrom für eine Mobilfunkdatenstrecke reserviert ist, die einen Teil mit hoher Dienstgüte von Medien überträgt, und mindestens ein anderer Mehrfachkompressionsstrom für restliche Medien reserviert ist und
mindestens ein Mehrfachkompressionsstrom für eine Mobilfunkdatenstrecke reserviert ist, die einen Teil mit hoher Dienstgüte von Medienkompressionsparametern überträgt, und mindestens ein anderer Mehrfachkompressionsstrom für einen Wi-Fi-Best-Effort-Teil von Medienkompressionsparametern reserviert ist.

4. Verfahren nach Anspruch 1, das weiterhin Folgendes umfasst:
Bestimmen einer oder mehrerer verfügbarer Basisstationen;
Bestimmen einer Datenstreckenqualität für jede der Basisstationen;
Auswählen einer Teilmenge der Basisstationen auf der Basis der jeweiligen Datenstreckenqualitäten, wobei die Anzahl von Strömen gleich der Anzahl von ausgewählten Zugangspunkten und Basisstationen ist; und
Übertragen der Ströme an die ausgewählten Zugangspunkte und Basisstationen, so dass die Ströme anschließend zur Verwendung an dem entfernten Clienten kombiniert werden, wobei eine Kennung eingesetzt wird, die mit jedem Paketfragment an jedem Strom assoziiert ist.

5. Verfahren nach Anspruch 4, wobei die Basisstationen Mobilfunkbasisstationen (222) sind.

6. Datenverarbeitungsvorrichtung (500) mit drahtloser Kommunikationsfähigkeit zum Sicherstellen einer akzeptablen Dienstgüte für Echtzeit-Medienkommunikationen über drahtlose Netzwerke, wobei die Datenverarbeitungsvorrichtung Folgendes umfasst:
einen Speicher (504), der Anweisungen speichert;
ein oder mehrere drahtlose Kommunikationsmodule und
einen Prozessor, der mit dem Speicher und den Kommunikationsmodulen gekoppelt ist, wobei der Prozessor eine Kommunikationsanwendung ausführt, wobei die Kommunikationsanwendung zu Folgendem konfiguriert ist:
Bestimmen der mehreren Zugangspunkte (104, 106, 108, 110), die mit einem oder mehreren drahtlosen Netzwerken assoziiert sind;
Bestimmen einer Datenstreckenqualität für jeden der mehreren Zugangspunkte;
Auswählen einer Teilmenge der Zugangspunkte auf der Basis der jeweiligen Datenstreckenqualitäten;
Zerlegen eines Medienstroms (116) in eine Anzahl von strömen, wobei die Anzahl von Strömen gleich einer Anzahl von Zugangspunkten in der Teilmenge ist; und
**dadurch gekennzeichnet, dass** die Datenverarbeitungsvorrichtung weiterhin zu Folgendem konfiguriert ist:
Assoziieren und Authentifizieren mit jedem der mehreren Zugangspunkte und
Übertragen der Ströme an die Teilmenge von Zugangspunkten, so dass die Ströme anschließend zur Verwendung an einem entfernten Clienten kombiniert werden, wobei der Schritt des Zerlegens das Komprimieren des Medienstroms zu einem oder mehreren von Mehrfachauflösungs- und
Mehrfachkompressionsströmen umfasst und die Kommunikationsmodule mehrere virtuelle Radio-Stack-Adapter beinhalten, um eine Assoziation und
Verbindung mit mehreren Zugangspunkten gleichzeitig ohne simultane Übertragung oder simultanen Empfang aufrechtzuerhalten.

7. Datenverarbeitungsvorrichtung nach Anspruch 6, wobei die virtuellen Radio-Stack-Adapter Teil einer einzigen Netzwerkschnittstellensteuerung ("network interface controller", NIC) (344) ist, die sich selbst gegenüber den mehreren Zugangspunkten zum Assoziieren und Authentifizieren als mehrere NIC präsentiert.

8. Datenverarbeitungsvorrichtung nach Anspruch 7, wobei die NIC dazu konfiguriert ist, während Medien-Streaming zwischen den ausgewählten Zugangspunkten umzuschalten.

9. Computerlesbarer Speicher, der Anweisungen zum Sicherstellen einer akzeptablen Dienstgüte für Echtzeit-Medienkommunikationen über drahtlose Netzwerke umfasst, wobei die Anweisungen bewirken, dass ein Computer die folgenden Schritte durchführt:
Bestimmen mehrerer Zugangspunkte (104, 106, 108, 110) und Basisstationen, die mit dem Netzwerk assoziiert sind;
Bestimmen einer Datenstreckenqualität für jeden der Zugangspunkte;
Auswählen einer Teilmenge der Zugangspunkte auf der Basis der jeweiligen Datenstreckenqualitäten;
Zerlegen eines Medienstroms (116) in eine Anzahl von strömen, wobei die Anzahl von Strömen gleich einer Anzahl von Zugangspunkten in der Teilmenge ist; und
Übertragen der Ströme an die Teilmenge von Zugangspunkten, so dass die Ströme anschließend zur Verwendung an einem entfernten Clienten kombiniert werden,
**dadurch gekennzeichnet, dass** die Anweisungen weiterhin bewirken, dass der Computer die folgenden Schritte durchführt:
Assoziieren und Authentifizieren mit jedem der mehreren Zugangspunkte und
Einsetzen mehrerer virtueller Radio-Stack-Adapter, um eine Assoziation und Verbindung mit den Zugangspunkten gleichzeitig ohne simultane Übertragung oder simultanen Empfang aufrechtzuerhalten, und wobei das Zerlegen das Komprimieren des Medienstroms zu einem oder mehreren von Mehrfachauflösungsströmen und Mehrfachkompressionsströmen umfasst.

10. Computerprogrammprodukt nach Anspruch 9, wobei die Datenstreckenqualität einer Ende-zu-Ende-Qualität, die mit dem Netzwerk assoziiert ist, durch Übertragen von Testnachrichten bestimmt wird.

## Revendications

1. Procédé exécuté dans un dispositif informatique (500) ou dans un environnement informatique distribué pour assurer une qualité de service acceptable pour des communications de médias en temps réel sur des réseaux sans fil, le procédé comprenant les opérations consistant à :
déterminer une pluralité de points d'accès (104, 106, 108, 110) associés à un ou plusieurs réseaux sans fil ;
déterminer une qualité de liaison pour chacun des points d'accès ; sélectionner un sous-ensemble des points d'accès sur la base des qualités de liaison respectives ;
décomposer un flux de médias (116) en un certain nombre de flux, le nombre de flux étant égal à un nombre de points d'accès dans le sous-ensemble ; et
transmettre les flux au sous-ensemble de points d'accès de telle sorte que les flux soient combinés ultérieurement pour une utilisation au niveau d'un client distant ;
**caractérisé en ce que** le procédé comprend les étapes supplémentaires consistant à :
effectuer l'association et l'authentification avec chaque point d'accès de la pluralité de points d'accès ; et
employer une pluralité d'adaptateurs d'empilement radio virtuels pour maintenir l'association et la connexion vers les points d'accès concurremment sans réception ou transmission simultanée, et cas dans lequel la décomposition comprend la compression du flux de médias en un ou plusieurs des suivants, soit des flux à multi-résolution, soit des flux à multi-compression.

2. Procédé selon la revendication 1, la décomposition du flux de médias en lesdits flux comprenant :
la compression du flux de médias en deux ou plusieurs flux à multi-résolution.

3. Procédé selon la revendication 2 :
au moins un flux à multi-compression étant réservé pour des médias audio/vidéo et au moins un autre flux à multi-compression étant réservé pour des médias à partage de fichiers ;
au moins un flux à multi-compression étant réservé pour des dispositifs d'entrée et au moins un autre flux à multi-compression étant réservé pour des médias restants ;
au moins un flux à multi-compression étant réservé pour une liaison cellulaire laquelle transmet une partie de médias à haute qualité de service et au moins un autre flux à multi-compression étant réservé pour des médias restants ; et
au moins un flux à multi-compression étant réservé pour une liaison cellulaire laquelle transmet une partie à haute qualité de service de paramètres de compression de médias, et au moins un autre flux à multi-compression étant réservé pour la partie Wi-Fi « au mieux » de paramètres de compression de médias.

4. Procédé selon la revendication 1, comprenant en outre les opérations consistant à :
déterminer une ou plusieurs stations de base disponibles ;
déterminer une qualité de liaison pour chacune des stations de base ;
sélectionner un sous-ensemble des stations de base sur la base des qualités de liaison respectives, cas dans lequel le nombre de flux est égal au nombre de points d'accès et de stations de base sélectionnés ; et
transmettre les flux aux points d'accès et aux stations de base sélectionnés de telle sorte que les flux soient combinés ultérieurement pour une utilisation au niveau du client distant lequel emploie un identifiant associé à chaque fragment de paquet sur chaque flux.

5. Procédé selon la revendication 4, les stations de base étant des stations de base cellulaires (222).

6. Dispositif informatique (500) avec une capacité de communication sans fil pour assurer une qualité de service acceptable pour des communications de médias en temps réel sur des réseaux sans fil, le dispositif informatique comprenant :
une mémoire (504) stockant des instructions ;
un ou plusieurs modules de communications sans fil ; et
un processeur couplé à la mémoire et aux modules de communication, le processeur exécutant une application de communication, cas dans lequel l'application de communication est configurée de façon à :
déterminer la pluralité de points d'accès (104, 106, 108, 110) associés à un ou plusieurs réseaux sans fil ;
déterminer une qualité de liaison pour chaque point d'accès de la pluralité de points d'accès ;
sélectionner un sous-ensemble des points d'accès sur la base des qualités de liaison respectives ;
décomposer un flux de médias (116) en un certain nombre de flux, le nombre de flux étant égal à un nombre de points d'accès dans le sous-ensemble ; et
**caractérisé en ce que** le dispositif informatique est configuré en outre de façon à :
effectuer l'association et l'authentification avec chaque point d'accès de la pluralité de points d'accès ; et
transmettre les flux au sous-ensemble de points d'accès de telle sorte que les flux soient combinés ultérieurement pour une utilisation au niveau d'un client distant, cas dans lequel l'étape de décomposition comprend la compression du flux de médias en un ou plusieurs des suivants, soit des flux à multi-résolution, soit des flux à multi-compression, et les modules de communication incluent une pluralité d'adaptateurs d'empilement radio virtuels pour maintenir l'association et la connexion vers une pluralité de points d'accès concurremment sans réception ou transmission simultanée.

7. Dispositif informatique selon la revendication 6, les adaptateurs d'empilement radio virtuels faisant partie d'un seul contrôleur d'interface réseau (NIC, « Network Interface Controller ») (344) qui se présente sous la forme de multiples NIC à la pluralité de points d'accès pour effectuer l'association et l'authentification.

8. Dispositif informatique selon la revendication 7, le NIC étant configuré de façon à commuter entre les points d'accès sélectionnés pendant la diffusion de médias en continu.

9. Mémoire lisible par ordinateur comprenant des instructions pour assurer une qualité de service acceptable pour des communications de médias en temps réel sur des réseaux sans fil, les instructions obligeant un ordinateur à réaliser les étapes consistant à :
déterminer une pluralité de points d'accès (104, 106, 108, 110) et des stations de base associées au réseau ;
déterminer une qualité de liaison pour chacun des points d'accès ;
sélectionner un sous-ensemble des points d'accès sur la base des qualités de liaison respectives ;
décomposer un flux de médias (116) en un certain nombre de flux, le nombre de flux étant égal à un nombre de points d'accès dans le sous-ensemble ; et
transmettre les flux au sous-ensemble de points d'accès de telle sorte que les flux soient combinés ultérieurement pour une utilisation au niveau d'un client distant ;
**caractérisé en ce que** les instructions obligent en outre l'ordinateur à réaliser les étapes consistant à :
effectuer l'association et l'authentification avec chaque point d'accès de la pluralité de points d'accès ; et
employer une pluralité d'adaptateurs d'empilement radio virtuels pour maintenir l'association et la connexion vers les points d'accès concurremment sans réception ou transmission simultanée, et cas dans lequel la décomposition comprend la compression du flux de médias en un ou plusieurs des suivants, soit des flux à multi-résolution, soit des flux à multi-compression.

10. Produit à programme informatique selon la revendication 9, la qualité de liaison d'une qualité de bout en bout associée au réseau étant déterminée par la transmission de messages d'essai.
